# EUROPEAN PATENT SPECIFICATION

(11) **EP 4 006 576 B1**
(45) Date of publication and mention of the grant of the patent: **22.01.2025**
(21) Application number: 20210724.9
(22) Date of filing: 30.11.2020
(51) Int. Cl.: G01S 7/487, G01S 7/4865, G01S 7/481

(54) **MULTICHANNEL TIME-OF-FLIGHT MEASUREMENT DEVICE WITH TIME-TO-DIGITAL CONVERTERS IN A PROGRAMMABLE INTEGRATED CIRCUIT**
MEHRKANALIGE LAUFZEITMESSUNGSVORRICHTUNG MIT TIME-TO-DIGITAL-CONVERTER IN EINEM PROGRAMMIERBAREN INTEGRIERTEN SCHALTKREIS
DISPOSIF DE MESURE DU TEMPS DEL VOL MULTICANAL AVEC CONVERTISSEURS TEMPS-NUMÉRIQUE DANS UN CIRCUIT INTÉGRÉ PROGRAMMABLE

(43) Date of publication of application: 01.06.2022
(73) Proprietor: Hexagon Technology Center GmbH, 9435 Heerbrugg (CH)
(72) Inventor: WOHLGENANNT, Rainer, A-6833 Klaus (AT); KOLLER, Roman, CH-9216 Hohentannen (CH); BESTLER, Simon, D-88085 Langenargen (DE); ROHNER, Marcel, CH-9035 Grub (CH)
(74) Representative: Kaminski Harmann

(56) References cited:
- US-A1- 2018 321 360
- US-A1- 2019 064 329
- US-A1- 2019 302 241

## Description

The present invention relates to a multi-beam measurement device for the three-dimensional geometric capture of an environment, particularly for surveying, surveillance, or monitoring.

Such measurement devices may be used in the fields of mobile mapping, surveying, surveillance, or autonomous driving. By way of example, the devices are mounted on vehicles, airborne systems, backpacks or drones, e.g. unmanned ground vehicles (UGVs) or unmanned aerial vehicles (UAVs), to measure the environment or to detect obstacles. Furthermore, the measurement devices may be used in a static assembly, e.g. to monitor certain areas (surveillance) or to measure, detect, count or classify objects moving past the measuring device, such as workpieces on a conveyor belt or motor vehicles on the highway.

Scanning objects or surfaces in surroundings is carried out by means of a distance measurement beam, e.g. a directional pulsed laser beam, wherein the spatial position of a surface point is determined from the measured distance to the targeted surface point and angle information providing the direction of the distance measurement beam. Typical measurement devices are able to move, e.g. rotate, one or multiple distance measurement beams to different pointing directions, wherein individual measurement directions and associated distances are linked with one another to generate a so-called 3D point cloud. Such 3D scanning is a very effective technology for producing millions of individual measurement points, in particular 3D coordinates, within minutes or multiple times per second.

Often, in parallel with this purely geometric acquisition of the surface, an image recording is additionally carried out by a camera, providing not only the visual overall view but also further information, e.g. with respect to the surface texture.

Various principles and methods are known in the field of electro-optical distance measurement. One approach consists in emitting pulsed electromagnetic radiation, such as e.g. laser light, at a target to be measured and subsequently receiving an echo from said target as backscattering object, wherein the distance to the target to be measured can be determined for example on the basis of the time-of-flight, the shape, and/or the phase of the pulse. Such laser distance measuring devices have in the meantime gained acceptance as standard solutions in many fields.

By way of example, in systems for distance measurements based on the time-of-flight (ToF) method the round-trip time of an emitted light pulse towards a target and back corresponds to the distance between the measuring device and the target to be measured.

Recently, the need for multi-channel (also referred to as multi-beam) measurement systems based on the time-of-flight method has steadily increased. For example, such multi-beam measurement devices have various advantages, e.g. the provision of a higher point rate or a higher point density even with a slower rotational speed of a transmitter unit, no need of mechanical beam deflection, and the provision of a homogenous point distribution at the measurement object.

By way of example, the number of channels in prior art multi-channel devices ranges from eight up to 128 channels or more. As light detectors, often avalanche photodiodes (APDs) or single photon avalanche photodiodes (SPAD), or arrays of SPADs, also referred to as silicon photomultiplier arrays, are used. The electrical signal generated by the detector is typically amplified and then sampled with an analog-to-digital converter (ADC) in order to determine time-discrete and amplitude-discrete sampling values. In case the signal pulses are essentially generated at the same time and the detectors are not read out sequentially, e.g. by multiplexing, multiple channels increase the need for the number of ADCs and the number of corresponding evaluation units. This may lead to additional costs, restricted space and thus more complex packaging and design, and higher energy consumption.

In particular, ADCs are expensive and require a lot of electrical energy. In addition, the subsequent processing of the sampled values generated by ADCs to determine the distance from the digitized signals is algorithmically complex. This leads to a need for expensive and complex processing units in the form of field-programmable gate arrays (FPGA) or microcontrollers (µC).

A possible solution to these problems is the use of several groups of detectors which are sampled at the same time but wherein the individual groups are read out sequentially. Another solution is the use of multiple storage elements, so-called sample-and-hold circuits, which are associated with a single ADC.

In any case, the need for the availability of a precise, simple, cost-effective and energy-saving time measurement circuit remains, e.g. for the flexible and multiple implementation in a complex but compact multi-beam measurement device.

US 2019/0064329 A1 relates to a device for measuring distance to an object, wherein the device comprises a field-programmable gate array (FPGA) configured to measure timing information for light pulses received by a light detection and ranging system. The FPGA includes a time-to-digital converter (TDC) having a series of sequentially coupled delay units, which are associated with corresponding individual delay times. At least some of the sequentially coupled delay units have different individual delay times. The TDC is configured to measure timing information of the pulse signal based at least in part on the individual delay times of the sequentially coupled delay units.

It is an object of the present invention to provide an improved multi-beam measurement device which overcomes the deficiencies of the prior art.

A particular object of the present invention is to provide a multi-beam measurement device based on the time-of-flight distance measuring method having an improved distance measuring unit, which provides precise distance measuring but at the same time more relaxed design requirements with regard to packaging and/or energy consumption of the measurement device.

At least parts of these objects are achieved by realizing the features of the independent claims. Features which further develop the invention in an alternative or advantageous manner are described in the dependent patent claims.

The invention is defined by a measurement device according to claim 1, with further embodiments set out in the dependent claims.

The invention relates to a measurement device for the three-dimensional geometric capture of an environment. The measurement device has: a multi-beam emitter for emitting a plurality of transmission beams, a multi-beam receiver having a plurality of receiving areas, e.g. multiple individual receiving surfaces or separately readable sub areas within a receiving surface, for receiving emitted transmission beams of the plurality of transmission beams returning from the environment, and a receiver circuit configured to generate (digital) return signals corresponding to the emitted transmission beams and to time signal changes of the return signals in order to derive time-of-flights of the emitted transmission beams. For example, the multi-beam emitter has a plurality of emission elements and/or comprises a beam splitting component, e.g. a diffractive or refractive optical element, configured to split an incoming beam into multiple outgoing beams having well-defined angular separations.

According to one aspect of the invention, the receiver circuit comprises a so-called programmable integrated circuit, also referred to as programmable digital electronic component, which provides hardware-related parallel processing. The programmable integrated circuit is an integrated circuit (also referred to as solid-state circuit or monolithic integrated circuit) specifically designed to be configured (programmed) after manufacturing, e.g. by a user or a designer. The programmability of the programmable integrated circuit is also referred to as so-called "field-programmability" of the integrated circuit, namely in the sense of "programmable in the field" or "programmable on site", e.g. by a customer.

For example, the programmable integrated circuit may be embodied as a field-programmable gate array (FPGA), a complex programmable logic device (CPLD), a programmable logic device (PLD), or an adaptive compute acceleration platform (ACAP).

The programmable integrated circuit has a plurality of parallel delay lines. Each delay line has a plurality of delay elements, which sequentially propagate an input signal of the respective delay line, wherein each of the delay elements is configured to provide a binary output as a function of the input signal, e.g. as a function of a signal change or of a signal amplitude of the input signal.

For example, the delay elements, e.g. configured as carry chains of adders, logic elements or routing elements, provide the binary outputs in case a rising and a falling edge of the input signal is recognized.

In one embodiment, each of the plurality of parallel delay lines comprises at least hundred, particularly at least thousand, delay elements.

The receiver circuit is configured to carry out a time measurement of a signal change of the input signal by sampling the binary outputs of the respective delay line and simultaneous consideration of the sampled binary outputs at a certain point in time by further taking into account individual time delays of the delay elements. This simultaneous consideration of the sampled binary outputs at a certain point in time is also referred to as so-called fine measurement
By way of example, for each of the plurality of parallel delay lines, the receiver circuit comprises a register line (or multiple register lines), wherein each register line has a plurality of registers associated to the plurality of delay elements and is configured to store the binary outputs, which, for example, are then provided to an analysis unit configured to carry out the time measurement of the signal change based on the stored binary outputs.

The receiver circuit further comprises a reference generator and a selector. The reference generator and the selector may be built as separate components or at least one of the reference generator and the selector may be part of the programmable integrated circuit. For example, the selector is placed outside the programmable integrated circuit with an electronic multiplexer circuit.

The reference generator is configured to generate a reference signal having a reference signal change, wherein the reference signal (e.g. the occurrence of the reference signal change) is asynchronous to a sampling clock driving the sampling of the binary outputs.

The selector is configured that individual ones of the delay lines are fed with individual ones of the return signals and that alternating each of the individual ones of the delay lines is fed with the reference signal instead.

Furthermore, the receiver circuit is configured to carry out a statistical analysis of the sampled binary outputs that correspond to the reference signal that propagated through one of the delay lines and, based thereof, to determine individual time delays of the delay elements of the one of the delay lines. These determined individual time delays are then taken into account in the time measurement of the signal change when the one of the delay lines is fed with one of the return signals.

In other words, rather than implementing a complex mathematical algorithm to determine the time shift of a reference pulse to the digitized measuring pulse, a series connection of several hundred or thousand delay elements, e.g. configured as carry chains of adders, logic elements or routing elements, is used in the form of a delay line through which the change of the input signal (e.g. the edges of the input signal) is propagated sequentially. By using the time delay of the individual delay elements and the simultaneous consideration of all outputs of the delay elements of a delay line at a certain point in time, the elapsed time since the change of the input signal (e.g. the switching edge) can be determined.

By way of example, the temporal sampling takes place at fixed predetermined times according to a high-precision, external clock. Accordingly, in a further embodiment, the receiver circuit comprises a common sampling clock configured to commonly drive the sampling of the binary outputs for all of the delay lines.

In a further embodiment, the receiver circuit is configured to count clock cycles of the sampling clock before the occurrence of the signal change (also referred to as coarse counting or coarse measurement), and to determine the elapsed time (also referred to as fine measurement) between clock cycles of the sampling clock since the occurrence of the signal change by using an asynchronous logic, e.g. an asynchronous FPGA logic in case the programmable integrated circuit is embodied as FPGA. The time measurement of the signal change is then carried out by combining the counted clock cycles of the sampling clock and the determined elapsed time between clock cycles of the sampling clock.

By way of example, the counting of the clock cycles of the sampling clock before the occurrence of the signal change is referred to as coarse counting, wherein the determining of the elapsed time between clock cycles of the sampling clock since the occurrence of the signal change is referred to as fine measurement. Thus, knowing the time of the increase in the coarse counting and the additionally elapsed time since the signal change occurred at the input of the programmable integrated circuit, which is determined by the time-delayed and sequential propagation of the signal change within the delay line, the exact and absolute time of the occurrence of the signal change at the input of the programmable integrated circuit can be determined.

The time resolution is determined by the delay time of individual elements of the delay line. The lower the delay of an element, the better the time resolution of the timing circuit. Due to the technological progress in the field of programmable integrated circuit manufacturing processes, programmable integrated circuits will become faster, which will further improve the time resolution of the delay elements in the future. Furthermore, due to technological progress, the individual delay elements within the programmable integrated circuit require less and less installation space, which means that the number of available delay elements within a programmable integrated circuit will continue to increase and a larger number of measurement channels can be implemented on a programmable integrated circuit.

However, in order to be able to determine the time delay exactly, it is necessary to know exactly the time delay of the individual delay elements. For this purpose, according to one aspect of the invention, the time delay of the individual delay elements is determined in a calibration process of the delay line that runs before the actual measurement sequence or in the background. This calibration process essentially comprises applying a, e.g. known, reference signal having a calibration switching edge (a reference signal change), which is asynchronous to the sampling clock (e.g. asynchronous to the coarse counting).

For example, a randomly occurring switching edge, e.g. in the form of a temporally statistical noise signal, is propagated through the delay lines such that many random switching operations are recorded.

Assuming that the calibration switching edge is evenly distributed over time and that each delay element has exactly the same delay, one also expects an even distribution of the switching edge within the delay line. This means that the switching edge occurs with the same number of times for a very large number of measurements (e.g. more than 100'000, particularly 1 '000'000 or more) for each delay line. If a delay element has a larger delay, a statistical accumulation (i.e. a higher number) of the switching edge occurs in this delay element. Therefore, based on the detection of the statistics of the switching edge for all delay elements, the duration of the delay of each of the individual delay elements can be inferred.

In a further embodiment, the statistical analysis to determine the individual time delays of the delay elements of the one of the delay lines is based on multiple propagations of the reference signal through the one of the delay lines and the assumption that the reference signal (i.e. the calibration switching edge) is evenly distributed over time.

Due to the large statistics of the number of measurements (e.g. more than 100'000, particularly 1 '000'000 or more) required for a sufficiently precise determination of the delay of the individual delay elements, the calibration process requires a considerable period of time, e.g. a few milliseconds up to a few seconds. During this period the delay line cannot be used for the actual measurement.

One aspect of the present invention is characterized in that the calibration process of the delay line is carried out in the background and in parallel with the actual measurement. For this purpose, the delay lines are configured such that they can be decoupled from the actual measurement input by an input selector (e.g. a multiplexer) and connected to the above-mentioned reference signal. For example, a number of n (e.g. nine) of delay lines are implemented in the programmable integrated circuit for a measuring system with a number of n-1 (e.g. eight) parallel timing channels. Because a greater number of delay lines is available in the programmable integrated circuit than the required number of measurement channels, the duration of the calibration process is not relevant and can be carried out in the background and in parallel with the actual time measurement. Thus, the actual measurement process does not have to be interrupted.

The delay / transit time of the individual delay elements can change and may be influenced, among other things, by temperature and supply voltage of the programmable integrated circuit. Since these parameters change only very slowly over time, e.g. in the range from one to several minutes or hours, it may be sufficient that only one delay line is calibrated in the background. Once the calibration of this one delay line has been completed, the reference signal is connected to another delay line by switching the input switch (e.g. multiplexer) and the already calibrated delay line can be used again to measure the time of an external input signal. This process is repeated, e.g. periodically, for all delay lines and their delay elements so that the actual measurement never has to be interrupted.

Alternative to this calibration scheme, it would also be conceivable to implement an external timing channel for the parallel calibration of the delay lines, wherein the length of the delay line (e.g. defined by the number of set delay elements) is compared with the time / distance measured in the reference channel. In a multi-channel system, the input pulses of the various delay lines are then synchronized cyclically with the reference channel. In such a calibration there is no need to internally switch between different delay lines.

In order to increase the measurement accuracy, e.g. thanks to a higher sampling rate, the same input signal of a delay line may be measured with several registers (also referred to as register lines), wherein the additional routing delay between the delay element and the associated several registers results in a higher sampling rate. Accordingly, in a further embodiment of the invention, for each of the plurality of parallel delay lines, the receiver circuit comprises multiple parallel register lines, each register line having a plurality of registers associated to the plurality of delay elements and being configured to store the binary outputs, wherein the receiver circuit is configured that an input signal propagating through a respective delay line of the plurality of delay lines is individually sampled by each of the corresponding register lines.

Another way to generate a multiple sampling of the signal in the time domain is to apply an identical input signal to several (different) delay lines of the programmable integrated circuit. Accordingly, in a further embodiment, the receiver circuit comprises a distributor section configured to generate several identical distributor section output signals out of a distributor section input signal, particularly wherein the distributor section output signals are copies of the distributor section input signal, and the receiver circuit is configured to feed the distributor section output signals to several of the plurality of parallel delay lines in parallel. Then, the receiver circuit is configured that the distributor section is fed with one of the return signals and/or the distributor section is fed with the reference signal.

For example, the distributor section is configured to connect an electrical signal (i.e. the distributor section input signal) to several inputs of a downstream component (i.e. each input of the downstream component receiving one of the distributor section output signals). Alternatively, the distributor section comprises a dedicated multiplication component, e.g. wherein different inputs of several comparators are connected electrically to form a so-called multiplier.

It can further be beneficial to use multiple sampling of the input signal in the amplitude range, which can be achieved by using a comparator arrangement before applying the input signal to several (different) delay lines of the programmable integrated circuit. Accordingly, in a further embodiment, the receiver circuit comprises multiple comparators providing different switching thresholds, each comparator providing a corresponding comparator output signal as a function of the corresponding switching threshold. For example, a comparator may provide a different output signal in case the input signal falls below or exceeds the assigned threshold value, e.g. wherein the comparator has two inputs (measurement signal and threshold signal) and one (digital) output (signal > threshold: output = 1; signal < threshold: output = 0). The receiver circuit is further configured that individual comparator output signals are fed in parallel to individual delay lines of the plurality of parallel delay lines and that the multiple comparators are fed with comparator input signals generated from one of the return signals and/or from the reference signal.

In a further embodiment, the receiver circuit is configured to compare the comparator output signals in order to determine amplitude dependent timing offsets in the time measurement of the signal change, particularly timing offsets due to range walk

In particular, in a generic time-to-digital circuit (TDC), which processes purely digital signals, a threshold value comparator usually generates the digital pulse from the analog input signal, wherein often the pulse width is measured to compensate the amplitude dependent timing of the rising and falling edge (so-called range walk effect). The pulse width is an indicator for the received energy or amplitude. In a generic TDC, e.g. based on an ADC, the TDC must measure the time difference between the rising and falling edge in order to compensate the range walk. In contrast, by using a programmable integrated circuit as described above, the rising / falling edges can be detected directly via the delay line information in one or more delay lines or via internal or external inversion and separate TDC channels.

In a further embodiment, the receiver circuit comprises an analysis unit being separate from the programmable integrated circuit, in particular comprising a further programmable integrated circuit or a microprocessor. The analysis unit is configured to carry out the simultaneous consideration of the sampled binary outputs at a certain point in time for the time measurement of the signal change, to carry out the statistical analysis of the sampled binary outputs that correspond to the reference signal that propagated through one of the delay lines, and to determine the individual time delays of the delay elements of the one of the delay lines. For example, this leads to an increased performance as the switching noise, crosstalk and fluctuations of the power consumption of the analysis unit are located at a different position than the programmable integrated circuit containing the delay lines.

By way of example, each distance measuring channel is defined by a unique combination of transmission channel, involving a laser trigger signal, a laser source, and pulser electronics, and a corresponding receiving channel comprising a detector, an electronic amplification circuit, one or more comparators or Schmitt triggers as described above, and one or more assigned programmable integrated circuit delay lines (the assignment does not have to be 1:1, but can be made arbitrarily within a certain framework).

A further aspect of the invention relates to the generation of a precisely known instant of time at which a laser pulse is transmitted within the plurality of transmission beams.

For example, in some applications, a so-called stop-only system may be desirable due to its lower complexity. In such a stop-only arrangement only the point in time of the received signal pulse is determined and it is assumed that the point of transmission is known exactly or at least to such a degree that a desired distance measurement accuracy is provided.

Anyway, according to this aspect of the invention, the time at which a laser pulse is sent, also known as the laser trigger, is determined by the programmable integrated circuit and sent to a laser pulser electronics, e.g. via a connection pin. The time of the laser trigger is not precisely timed or noisy, e.g. due to non-ideal electronics (output driver of the programmable integrated circuit and interference such as crosstalk from other signals within the programmable integrated circuit or due to supply voltage fluctuations in the programmable integrated circuit). This is insufficient for an accurate distance measurement, e.g. to provide one to several millimeter accuracy. It is therefore necessary either to determine or measure the transmission time precisely or to define it exactly.

Measuring the transmission time by means of a separate channel (so-called start channel) is complex and, since this requires an extra measuring channel including evaluation, may not be desirable.

Another possibility to provide an exact transmission time without time jitter is to use a synchronization circuit outside the programmable integrated circuit, which synchronizes the noisy laser trigger signal of the programmable integrated circuit output with a precisely defined and noise-free clock signal. As a result, the programmable integrated circuit basically only specifies the imprecise time at which the laser pulse is transmitted, whereas the exact point in time is determined by the noise-free clock signal.

In a further embodiment, the measurement device comprises laser pulser electronics configured to generate a synchronized laser trigger signal for triggering laser pulse emission in the scope of emitting of the plurality of transmission beams, wherein the programmable integrated circuit comprises a trigger generator configured to generate an initial trigger signal and wherein the laser pulser electronics is configured to generate the synchronized laser trigger signal by synchronizing the initial trigger signal with a known transmission clock signal.

With multi-channel distance measurement systems, laser pulses or at least groups of laser pulses are often transmitted sequentially one after the other, e.g. to reduce optical crosstalk between the individual channels and for reasons of eye safety. For example, this could be implemented by several different laser trigger signals for the corresponding laser pulser. However, since the number of (e.g. high speed) outputs or connection pins of a programmable integrated circuit are limited, this may cause undesirable additional power consumption and a synchronization circuit would be required for each individual output.

Instead, according to a further aspect of the invention, a single synchronized laser pulse (or, if required, a few pulses) precisely determined by the synchronization circuit described above is lead via an electronic linkage circuit, wherein the laser pulse is essentially active when any one (logical "or") of the numerous transmitting lasers is activated. Furthermore, so-called activation signals are generated by the programmable integrated circuit, which are clearly assigned to the respective transmission channels. These activation signals have low requirements in terms of time accuracy (jitter) and can be implemented in a cost- and power-saving manner. The linking circuit now makes it possible to use the single or the few high-precision synchronized laser trigger(s) generated by the synchronizing circuit and the numerous linking signals to generate the high-precision and numerous laser trigger signals for the individual laser pulsers. This offers the advantage that only one or a few fast programmable integrated circuit output signal(s) and only one or a few power-intensive synchronization circuit(s) is / are required and the laser triggers with the low time jitter are still available for a large number of laser pulsers.

Thus, in a further embodiment, the measurement device comprises a linking generator and multiple laser triggers, wherein each of the laser triggers is configured to provide the triggering of laser pulse emission in the scope of emitting an associated transmission beam of the plurality of transmission beams. The multiple laser triggers are controlled by the same synchronized laser trigger signal, wherein the linking generator is configured to generate activation signals for the transmission beams associated to the multiple laser triggers, particularly wherein each of the transmission beams associated to the multiple laser triggers is uniquely assigned to one of the activation signals. Furthermore, the measurement device is configured that each of the activation signals activates the emission of its associated transmission beam by its associated laser trigger.

An alternative implementation is that the individual «common» laser trigger, sent by the programmable integrated circuit, is routed to a programmable integrated circuit input and a delay line connected behind it, in order to precisely determine the exact transmission time of this common laser trigger signal.

It is irrelevant whether the laser trigger is generated synchronously or asynchronously (e.g. angle triggered) to the system clock. It is only required to know or measure the exact time.

The measurement device according to the invention is described or explained in more detail below, purely by way of example, with reference to working examples shown schematically in the drawing. Identical elements are labelled with the same reference numerals in the figures. The described embodiments are generally not shown true to scale and they are also not to be interpreted as limiting the invention. Specifically,
- Fig. 1:: an exemplary embodiment of a multi-beam measurement device within the scope of the invention;
- Fig. 2:: another exemplary embodiment of a multi-beam measurement device within the scope of the invention;
- Fig. 3:: an exemplary embodiment of a programmable integrated circuit design to be used in a receiver circuit according to the invention;
- Fig. 4:: an exemplary embodiment of an input channel of a receiver circuit having a comparator;
- Fig. 5:: an exemplary amplitude vs. time dependency of different input signals to the programmable integrated circuit in case a comparator as depicted by Fig. 4 is used;
- Fig. 6:: an exemplary delay channel for one delay line of a programmable integrated circuit useable according to the invention;
- Fig. 7:: a timing scheme for the delay line channel depicted by Fig. 6;
- Fig. 8:: an exemplary embodiment of an emitter circuit useable in a measurement device according to the invention to precisely time the emission instant of measuring pulses.

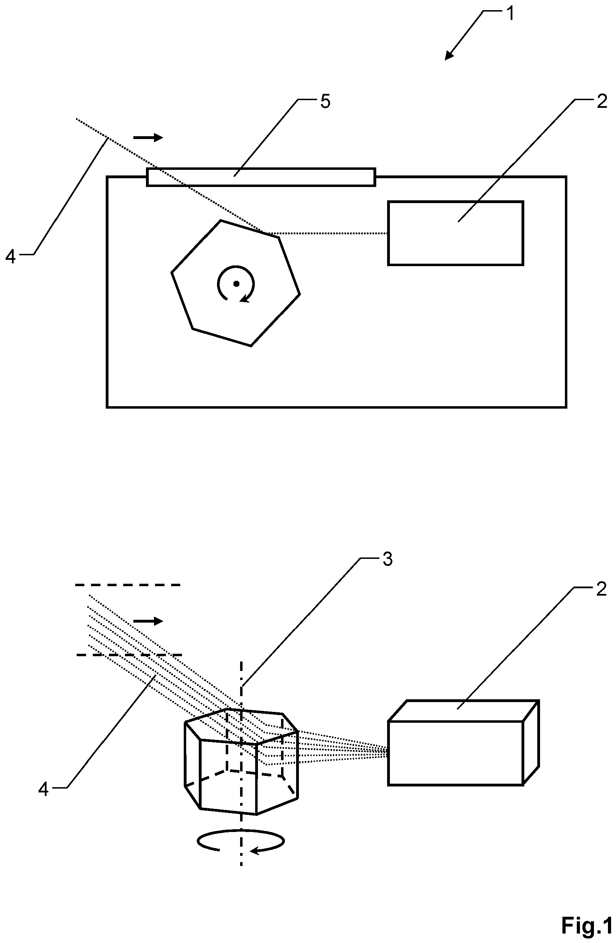

**Figure 1** schematically depicts, in a top view and in a perspective view, an embodiment of a multi-beam measurement device 1 within the scope of to the invention.

The measurement device 1 comprises a mult-beam emitter 2, configured to generate a plurality of, e.g. pulsed, distance measuring beams. The plurality of measuring beams, also referred to as transmission beams, are directed onto a varying deflection element, here a reflective polygon rotating around a vertical rotation axis 3.

The plurality of transmission beams thus defines a fan 4 of distance measuring beams rotating about the rotation axis 3 (lying in a vertical plane). An instantaneous vertical field of view is covered by the fanned out multiple measuring beams, whereas scanning in azimuthal direction is achieved by means of the fast rotating polygon prism. The elevation here refers to an angle to the axis of rotation 3, typically measured from a ground plane orthogonal to the axis of rotation 3. With exactly vertical alignment of the axis of rotation 3, as shown in the figure, the elevation thus corresponds to a certain distance of height above ground. However, it goes without saying that the measurement device 1 can be arranged in any orientation to the ground. For example, the elevation in a horizontal orientation of the axis of rotation 3 corresponds to an angle to the rotation axis measured from a vertical plane.

By way of example, the multi-beam emitter 2 and the polygon prism are enclosed by a protective housing, which has window 5 allowing the transmitted and the returning radiation to pass.

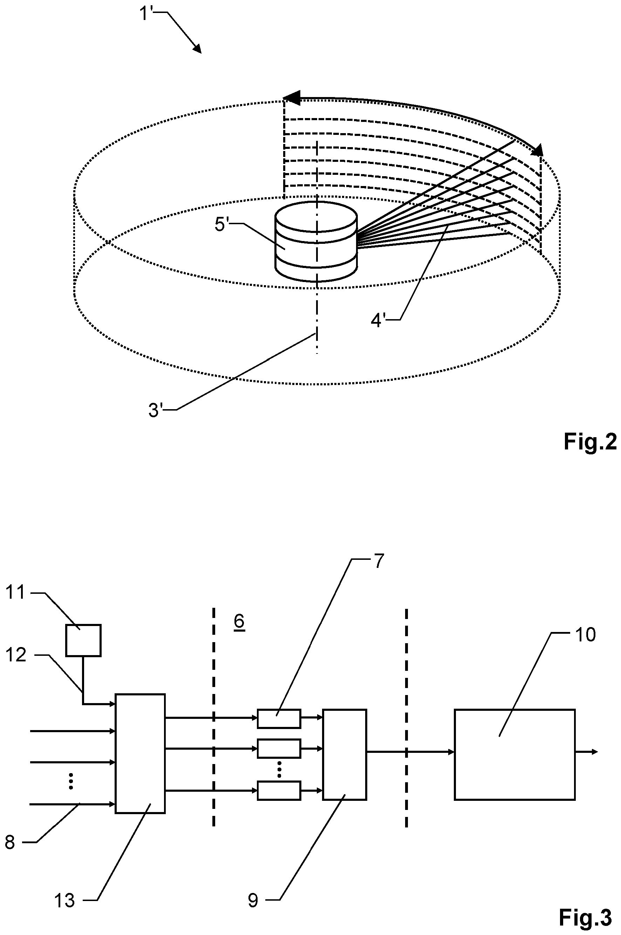

**Figure 2** exemplarily shows an outer view of another multi-beam measurement device 1' within the scope of the invention, formed with a base and a rotating member (not shown) arranged rotatably on the base about a rotation axis 3' relative to the base. By way of example, the rotating member is enclosed by a protective housing, which is fixed to the base and has a circumferential window 5' allowing the transmitted and the returning radiation to pass. Alternatively, the protective housing and a (e.g. non-circumferential) transmission and reception window could also be configured to rotate with the rotating member.

The measurement device 1' is configured to generate a plurality of transmission beams for transmitting pulsed distance measuring radiation, wherein different elevations are scanned by different transmission beams. The elevation here refers to an angle to the axis of rotation 3' (similar to Fig. 1). With exactly vertical alignment of the axis of rotation 3', as shown in the figure, the elevation thus corresponds to a certain distance of height above ground.

Referring to the exemplary horizontal arrangement of the measurement device 1' shown in the figure, i.e. a vertical alignment of the rotation axis 3', the plurality of transmission beams thus defines a fan 4' of distance measuring beams rotating about the rotation axis 3' (lying in a vertical plane).

As a result, a circumferential field of view (field of the scanning area) may be generated, e.g. of 360 ° x 25 °, by rotating the fan 4' about the rotation axis 3'. Alternatively, a partial field of view, e.g. 80 ° x 25 ° may be scanned by oscillating the fan 4' back and forth or by only generating coordinate measuring data for a particular observation window, e.g. a particular azimuthal range. Furthermore, the measurement device can also be configured to provide an extension of the vertical field of view by tilting the rotating member with respect to the rotation axis 3'.

For example, the transmission beams are generated by means of a plurality of laser arrays. Returning distance measuring beams of the different transmission beams entering a receiver objective unit are directed, e.g. in a straight or angled fashion, to a plurality of receiver arrays, e.g. based on semiconductor photomultiplier sensors (SiPM sensors or SPAD arrays) or avalanche photo diodes (APD) configured for distance measurements.

The data of the measurement device 1' may then be used by a computing unit configured to derive a three-dimensional point cloud based on angle data providing the angular orientation of the rotating member about the rotation axis 3', the distance measurement data, and stored directional data providing the beam direction of each of the plurality of transmission beams.

**Figure 3** shows an exemplary embodiment of a programmable integrated circuit design, e.g. a FPGA design, to be used in a receiver circuit according to the invention.

FPGAs (field-programmable gate arrays) are electronic components whose functionality can be freely programmed to a certain extent through the freely selectable arrangement of logic elements. For example, FPGA allow to implement a timing circuit programmed with picosecond accuracy for Lidar, which enables a compact setup of the measurement device 1 with multiple parallel measurement channels. In particular, no special ASIC (application-specific integrated circuit) is necessary, e.g. allowing reduced requirements on hardware development and investment costs. Thanks to the increasing integration density of FPGAs several channels can be implemented in one FPGA.

The FPGA 6 comprises a plurality of parallel delay lines 7, wherein each delay line 7 has a plurality of delay elements (not shown), which sequentially propagate an input signal of the respective delay line, wherein each of the delay elements provides a binary output as a function of a signal change of the input signal. By way of example, the FPGA is mounted on a printed circuit board (PCB) and receives return signals 8, each return signal corresponding to one of the emitted transmission beams. The outputs of each delay line 7 are provided, e.g. via a serialization / arbitration uplink unit 9, to an analysis unit 10, configured to carry out a time measurement of signal changes of the return signals 8 by simultaneous consideration of the sampled binary outputs of an individual delay line 7 at a certain point in time, by further taking into account individual time delays of the delay elements of the respective delay line 7.

The receiver circuit further comprises a reference generator 11 configured to generate a reference signal 12 having a reference signal change, wherein the reference signal is asynchronous to a sampling clock driving the sampling of the binary outputs. Furthermore, a selector 13 is used, being configured that individual ones of the delay lines 7 are fed with individual ones of the return signals 8 and that alternating each of the individual ones of the delay lines 7 is fed with the reference signal 12 instead.

The analysis unit 10 is configured to carry out a statistical analysis of the sampled binary outputs that correspond to the reference signal 12 that propagated through one of the delay lines 7 and, based thereof, to determine individual time delays of the delay elements of the one of the delay lines and to take into account the determined individual time delays in the time measurement of the signal change when the one of the delay lines 7 is fed with one of the return signals 8.

For example, in the FPGA, the TDC measures the point in time of an edge of a binary signal using a coarse and a fine measurement. The coarse measurement is based on counting clock cycles in the ns range (e.g. 2*10⁻⁹ s). The fine measurement determines the time between clock cycles through signal propagation by asynchronous FPGA logic. This is achieved by chaining elementary FPGA resources such as look-up tables (LUTs), routing resources or carry logic for adders. The use of adders currently allows the highest time resolution and is therefore beneficial for high measurement accuracy. The chaining of such modules is called a delay line. When the delay line is sampled one often refers to it as a tapped delay line. At the time of a clock edge, the content of the delay line is stored in one or more parallel register lines and then evaluated. The pattern in the register line, together with a calibration, allows an exact determination of the time of an edge.

By way of example, the analysis unit 10 is placed in a different FPGA (analysis FPGA) than the FPGA 6 containing the delay line. This leads to an increased performance as the switching noise, crosstalk and fluctuations of the power consumption of the analysis FPGA are located at a different position than the FPGA 6 containing the delay lines. Thus, the analysis FPGA has no influence on the individual time delays of the delay lines 7.

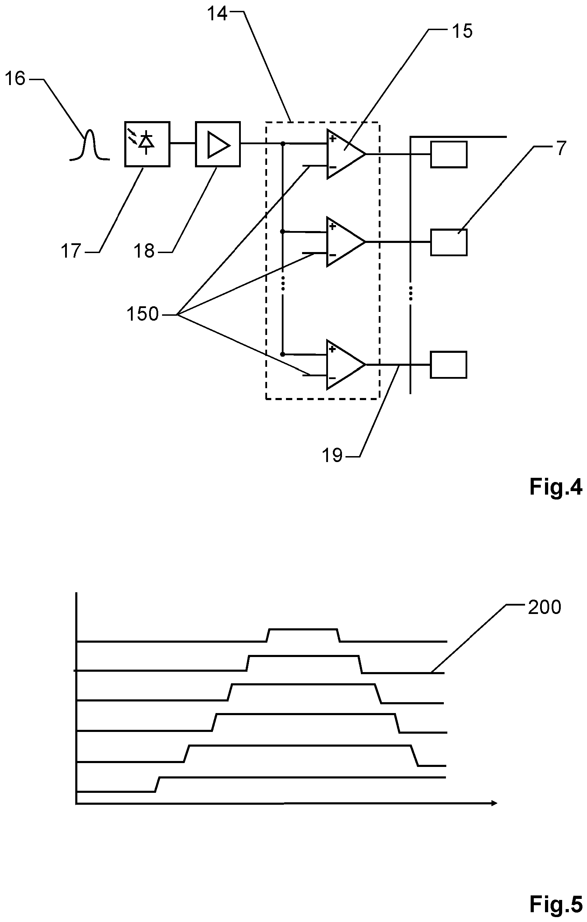

**Figure 4** shows an exemplary embodiment of an input channel of a receiver circuit having a comparator arrangement 14, which has several different comparators 15 driven by different switching thresholds 150, wherein each comparator 15 provides a corresponding comparator output signal 19 as a function of the corresponding switching threshold 150. Individual comparator output signals 19 are fed in parallel, e.g. via a selector 13 (not shown, see Fig. 3) to individual delay lines 7 of the plurality of parallel delay lines.

For example, the returning transmission pulse 16 is detected by a detector 17 and the comparator arrangement 14 receives a signal amplified by an amplifier 18. The comparator arrangement 14 outputs digitized signals 19 (each digitized signal 19 being associated with the returning transmission pulse 16), which are fed to several of the plurality of parallel delay lines 7 in parallel.

This way a multiple sampling of the return signal is achieved in the amplitude range. This means the return signal is thresholded multiple times to generate different signals depending on their amplitude. This leads to different input signals 200 for the individual delay lines 7 of the FPGA 6, e.g. as depicted by **figure 5****,** which shows the amplitude (vertical) over time (horizontal) of different input signals 200, wherein each input signal 200 is foreseen to be fed to one of the delay lines 7.

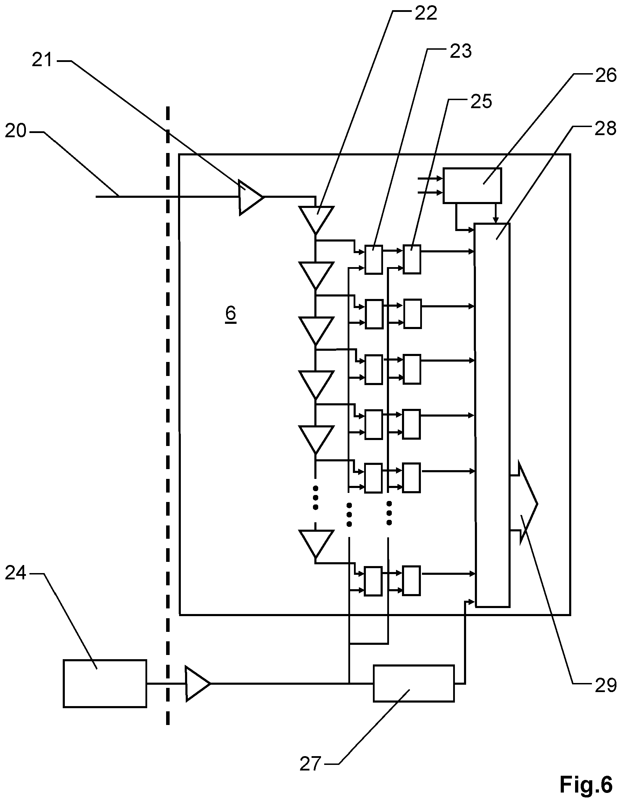

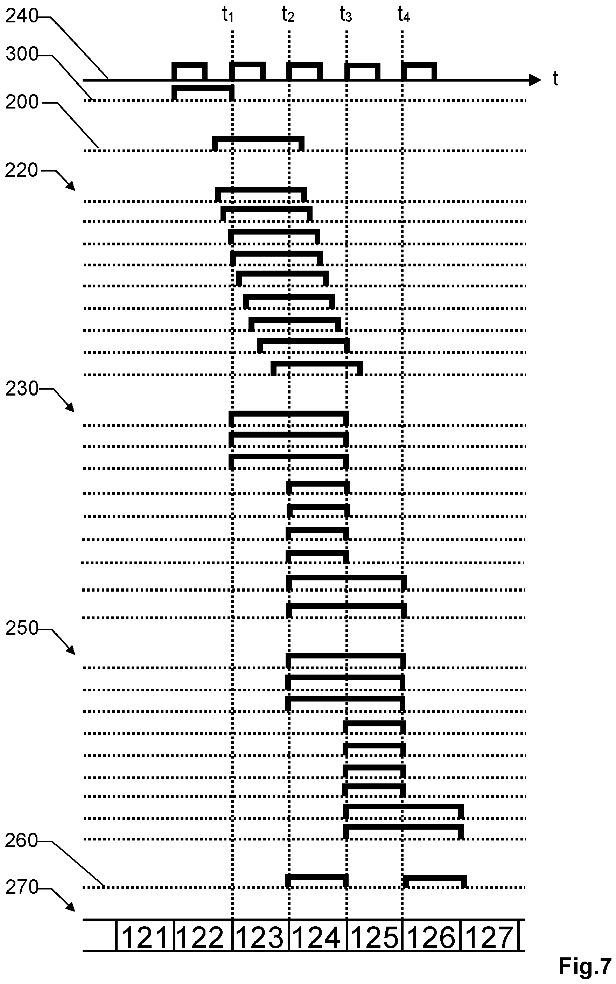

**Figures 6** **and** **7** schematically depict a delay channel (one delay line 7) of an FPGA useable according to the invention (Fig. 6) and a corresponding timing scheme (Fig. 7).

The delay line shown by Fig. 6 comprises an input buffer 21 connected to an input channel 20 for receiving an input signal 200. By way of example, the delay line may have 100 to 1000 delay elements 22. Each delay element causes a delay of a certain amount of time. The asynchronous output signal of the delay elements is sampled by registers 23 (same number of registers 23 as delay elements 22) using a highly stable sampling clock generated by an oscillator 24. The oscillator 24 may be followed by an FPGA-internal or external PLL for jitter reduction. The registers 23 are registered again at least once or twice by additional registers 25, e.g. in order to avoid metastabilities. A trap logic 26 determines if the data in the additional registers 25 contain an edge or not and, based thereof, the register content including values of a coarse counter 27 are provided to a FIFO 28 ("First In - First Out"). The output 29 of the FIFO 28 is then used for further processing.

**Figure 7** shows the timing scheme for the above described example, wherein the following lines are depicted: a line corresponding to the sampling clock 240, to the laser trigger 300, to the input signal 200, to the input signal propagating through the delay elements 220, to the first register 230, to the additional register 250, and to the trap logic 260, wherein at the bottom the corresponding coarse counter values 270 are indicated.

For the ease of simplicity, in the following example the input signal 200 is fed through a delay line with nine delay elements 22. The input pulse is 1.5 clock cycles wide. This results in a binary sequence 250 of the additional registers 25 on the delay line at t₂ of 111000000, i.e. the fine point in time of the rising edge of the input pulse is at the third delay element and an edge point in time can be assigned to it (fine measurement).

In this example we assume that the delay elements all take the same amount of time for one pass, i.e. the rising edge is around 3/9 of a clock cycle. Normally, however, the transit times are unequal and must be calibrated. The falling edge can be found at time t₄, wherein the binary sequence is 000000011, thus at around 7/9 of a clock cycle.

When the trap logic decides to store a record, the coarse counter value 270 needs to be saved as well for the final calculation at what time the edges happen. In the example, the rising edge is at coarse counter value t₂ = 124 and the falling edge at t₄ = 125. The width of the pulse can therefore be determined and is around 13/9, i.e. close to the original pulse width (1.5).

With an increase in the number of delay elements, the maximum measurement time of the delay line is increased. For example, this means that the coarse counter / sampling clock frequency could be lowered at the cost of lower accuracy due to jitter.

With smaller delays of the delay elements, the resolution of the delay line is increased. Thus, for example, technical progress will lead to even faster processing and switching speeds inside the FPGA.

The trap logic 26 determines from the registers 23, 25 whether a data record should be saved and processed, it must determine whether there is an edge or a pulse in the delay line. In the simplest case, it can observe the first register corresponding to the first delay element, e.g. wherein in case this changes its state, the output should be saved, otherwise not. This works for long pulses (> 1 sampling period), if shorter pulses or pulse intervals are to be detected, the trap logic 26 can be improved, wherein, for example, several registers (e.g. every 100th register of the additional registers 25) are included in the decision.

An input pulse can also be fed into several delay lines in parallel, i.e. it can be sampled several times. This can lead to higher measurement accuracy. In addition, the pulse can also be directed to one delay line, which is then sampled several times by multiple parallel register lines. The additional routing delay between the delay element and register also results in higher sampling resolution, e.g. providing higher measurement accuracy.

With all variants (single or multiple delay lines, single or multiple samplings), it may be beneficial when the delay elements are positioned close to each other and to the input pins of the FPGA so that the delays are as small as possible.

According to one aspect of the invention, an inventive TDC calibration is used to determine the time delays between the neighboring delay elements in the delay line. For example, this TDC calibration is carried out using a statistical measurement method (code density analysis). An asynchronous pulse is measured many times by the TDC and the delay of each delay element can be determined by assuming that the pulses are evenly distributed over time. This calibration is then used to convert the delay line information into a unit of time.

The input can have different sources, e.g. asynchronous calibration pulses (oscillator) and measuring pulses. Switching input (placement of selector 13, see Fig. 3) can be done internally or externally of the FPGA. Additionally, for example, an internal or external oscillator is used for calibration.

As explained above, calibration includes alternating between reference signal and return signal, e.g. by using a selector 13 as described above. For example, at least one of the delay lines is foreseen for calibration during the measurement process. Then it is switched to another delay line to be calibrated. Alternatively, each measuring channel is calibrated during the measurements, e.g. by using a calibration pulse after each measurement pulse.

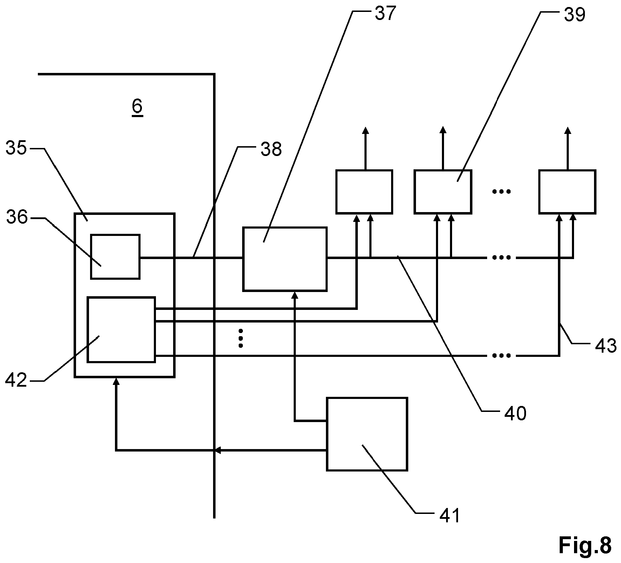

**Figure 8** shows an exemplary embodiment of an emitter circuit useable in a measurement device according to the invention to precisely time the emission instant of measuring pulses.

Here, the above described FPGA 6 further comprises a laser pulser 35 having a trigger generator 36. The trigger generator 36 is configured to generate an initial laser trigger signal 38 for triggering laser pulse emission by individual laser triggers 39. The emitter circuit further comprises a synchronization circuit 37 configured to convert the initially noisy laser trigger signal 38 into a precise synchronized trigger signal 40 to be provided to the laser triggers 39, by synchronizing the initial trigger signal 38 with a known (jitter-free) transmission clock signal 41.

Furthermore, the laser pulser 35 comprises a linking generator 42 configured to generate activation signals 43 for the transmission beams associated to the multiple laser triggers 39. Therefore, the single synchronized (high-precision) trigger signal 40 generated by the synchronizing circuit is useable to drive the individual laser triggers 39.

## Claims

1. Measurement device (1, 1') for a three-dimensional geometric capture of
an environment, with
• a multi-beam emitter (2) for emitting a plurality of transmission beams (4),
• a multi-beam receiver having a plurality of receiving areas for receiving emitted transmission beams of the plurality of transmission beams returning from the environment, and
• a receiver circuit configured to generate return signals (8) corresponding to the emitted transmission beams and to time signal changes of the return signals in order to derive time-of-flights of the emitted transmission beams,
**characterized in that**
• the receiver circuit comprises a programmable integrated circuit (6) having a plurality of parallel delay lines (7), wherein each respective delay line (7) of the plurality of parallel delay lines has a plurality of delay elements (22), which sequentially propagate an input signal (200) of the respective delay line (7), wherein each delay element of the plurality of delay elements (22) is configured to provide a binary output as a function of the input signal (200),
• the receiver circuit is configured to carry out a time measurement of a signal change of the input signal (200) by sampling the binary outputs of the respective delay line (7) and simultaneous consideration of the sampled binary outputs (230, 250) at a certain point in time by further taking into account individual time delays of the delay elements (22), and
• the receiver circuit further comprises
∘ a reference generator (11) configured to generate a reference signal (12) having a reference signal change, wherein the reference signal is asynchronous to a sampling clock (24) driving the sampling of the binary outputs, and
∘ a selector (13) configured such that individual ones of the delay lines (7) are fed with individual ones of the return signals (8) and such that alternating each of the individual ones of the delay lines (7) is fed with the reference signal (12) instead; and
• the receiver circuit is configured to carry out a statistical analysis of the sampled binary outputs (230, 250) that correspond to the reference signal (12) that propagated through one of the delay lines (7) and, based thereof, to determine individual time delays of the delay elements (22) of the one of the delay lines (7) and to take into account the determined individual time delays in the time measurement of the signal change when the one of the delay lines (7) is fed with one of the return signals (8).

2. Measurement device (1, 1') according to claim 1,
**characterized in that**
the delay elements are configured to provide the binary outputs by recognition of a rising and/or a falling edge of the input signal.

3. Measurement device (1, 1') according to claim 1 or 2,
**characterized in that**
the receiver circuit comprises a common sampling clock (24) configured to commonly drive the sampling of the binary outputs for all of the delay lines (7).

4. Measurement device (1, 1') according to one of the preceding claims, **characterized in that**
the receiver circuit is configured to
• count clock cycles of the sampling clock before an occurrence of the signal change, and
• determine the elapsed time between clock cycles of the sampling clock since the occurrence of the signal change by using an asynchronous logic,
wherein the time measurement of the signal change is carried out by combining the counted clock cycles of the sampling clock (24) and the determined elapsed time between clock cycles of the sampling clock (24).

5. Measurement device (1, 1') according to one of the preceding claims,
**characterized in that**
for each of the plurality of parallel delay lines (7), the receiver circuit comprises a register line, each register line having a plurality of registers (23, 25) associated to the plurality of delay elements (22) and being configured to store the binary outputs.

6. Measurement device (1, 1') according to one of claims 1 to 4,
**characterized in that**
• for each of the plurality of parallel delay lines (7), the receiver circuit comprises multiple parallel register lines, each register line having a plurality of registers (23, 25) associated to the plurality of delay elements (22) and being configured to store the binary outputs, and
• the receiver circuit is configured that an input signal (200) propagating through a respective delay line (7) of the plurality of delay lines is individually sampled by each of the corresponding register lines.

7. Measurement device (1, 1') according to one of the preceding claims,
**characterized in that**
• the receiver circuit comprises a distributor section configured to generate several identical distributor section output signals out of a distributor section input signal (8, 12), and
• the receiver circuit is configured to feed the distributor section output signals to several of the plurality of parallel delay lines (7) in parallel,
wherein the receiver circuit is configured that the distributor section is fed with one of the return signals (8) and/or the distributor section is fed with the reference signal (12).

8. Measurement device (1, 1') according to one of the preceding claims,
**characterized in that**
• the receiver circuit comprises multiple comparators (15) providing different switching thresholds (150), each comparator (15) providing a corresponding comparator output signal (19) as a function of the corresponding switching threshold (150),
• the receiver circuit is configured that individual comparator output signals (19) are fed in parallel to individual delay lines (7) of the plurality of parallel delay lines, and
• the receiver circuit is configured that the multiple comparators (15) are fed with comparator input signals generated from one of the return signals (8) and/or from the reference signal (12).

9. Measurement device (1, 1') according to claim 8,
**characterized in that**
the receiver circuit is configured to compare the comparator output signals (19) in order to determine amplitude dependent timing offsets in the time measurement of the signal change, particularly timing offsets due to range walk.

10. Measurement device (1, 1') according to one of the preceding claims, **characterized in that**
the statistical analysis to determine the individual time delays of the delay elements (22) of the one of the delay lines (7) is based on multiple propagations of the reference signal (12) through the one of the delay lines (7) and an assumption that a rising and/or falling edge of the reference signal is evenly distributed over time.

11. Measurement device (1, 1') according to one of the preceding claims,
**characterized in that**
each of the plurality of parallel delay lines (7) comprises at least hundred delay elements (22).

12. Measurement device (1, 1') according to one of the preceding claims,
**characterized in that**
the receiver circuit comprises an analysis unit (10) being separate from the programmable integrated circuit (6), wherein the analysis unit (10) is configured
• to carry out the simultaneous consideration of the sampled binary outputs at a certain point in time for the time measurement of the signal change, and
• to carry out the statistical analysis of the sampled binary outputs that correspond to the reference signal (12) that propagated through one of the delay lines (7), and, based thereof, to determine the individual time delays of the delay elements (22) of the one of the delay lines (7).

13. Measurement device (1, 1') according to one of the preceding claims,
**characterized in that**
the measurement device (1, 1') comprises laser pulser electronics configured to generate a synchronized laser trigger signal (40) for triggering laser pulse emission in the scope of emitting of the plurality of transmission beams (4, 4'), wherein
• the programmable integrated circuit (6) comprises a trigger generator (36) configured to generate an initial trigger signal (38), and
• the laser pulser electronics is configured to generate the synchronized laser trigger signal (40) by synchronizing the initial trigger signal (38) with a known transmission clock signal (41), particularly wherein the transmission clock signal (41) is generated by the same clock source (24) as the sampling clock.

14. Measurement device (1, 1') according to claim 13,
**characterized in that**
the measurement device (1, 1') comprises a linking generator (42) and multiple laser triggers (39), wherein
• each of the laser triggers (39) is configured to provide the triggering of laser pulse emission in the scope of emitting an associated transmission beam of the plurality of transmission beams (4, 4'),
• the multiple laser triggers (39) are controlled by the same synchronized laser trigger signal (40),
• the linking generator (42) is configured to generate activation signals (43) for the transmission beams (4, 4') associated to the multiple laser triggers (39), particularly wherein each of the transmission beams associated to the multiple laser triggers (39) is uniquely assigned to one of the activation signals (43), and
• the measurement device (1, 1') is configured that each of the activation signals (43) activates the emission of its associated transmission beam by its associated laser trigger (39).

15. Measurement device (1, 1') according to one of claims 1 to 14,
**characterized in that**
• the programmable integrated circuit (6) comprises a trigger generator (36) configured to generate a laser trigger signal (38),
• the measurement device (1, 1') is configured to feed the laser trigger signal (38) to a delay line of another programmable integrated circuit and, based thereof, to determine an emission time of the laser trigger signal (38).

## Patentansprüche

1. Messvorrichtung (1, 1') für ein dreidimensionales geometrisches Festlegen einer Umgebung mit
• einem Mehrstrahlemitter (2) zum Emittieren einer Vielzahl von Übertragungsstrahlen (4),
• einem Mehrstrahlempfänger, der eine Vielzahl von Empfangsbereichen aufweist, zum Empfangen emittierter Übertragungsstrahlen der Vielzahl von Übertragungsstrahlen, die von der Umgebung zurückkehren, und
• einem Empfängerschaltkreis, der dazu konfiguriert ist, Rückkehrsignale (8), die den emittierten Übertragungsstrahlen entsprechen, zu generieren, und Signaländerungen der Rückkehrsignale zeitlich zu erfassen, um Laufzeiten der emittierten Übertragungsstrahlen abzuleiten,
**dadurch gekennzeichnet, dass**
• der Empfängerschaltkreis einen programmierbaren integrierten Schaltkreis (6) umfasst, der eine Vielzahl paralleler Verzögerungsleitungen (7) aufweist, wobei jede jeweilige Verzögerungsleitung (7) der Vielzahl paralleler Verzögerungsleitungen eine Vielzahl von Verzögerungselementen (22) aufweist, die ein Eingabesignal (200) der jeweiligen Verzögerungsleitung (7) sequenziell verbreiten, wobei jedes Verzögerungselement der Vielzahl von Verzögerungselementen (22) dazu konfiguriert ist, eine binäre Ausgabe als eine Funktion des Eingabesignals (200) bereitzustellen,
• der Empfängerschaltkreis dazu konfiguriert ist, eine Zeitmessung einer Signaländerung des Eingabesignals (200) durch Abtasten der binären Ausgaben der jeweiligen Verzögerungsleitung (7) und gleichzeitige Betrachtung der abgetasteten binären Ausgaben (230, 250) zu einem gewissen Zeitpunkt durch weiteres Berücksichtigen einzelner Zeitverzögerungen der Verzögerungselemente (22) auszuführen, und
• der Empfängerschaltkreis ferner Folgendes umfasst:
∘ einen Referenzgenerator (11), der dazu konfiguriert ist, ein Referenzsignal (12), das eine Referenzsignaländerung aufweist, zu generieren, wobei das Referenzsignal gegenüber einem Abtasttaktgeber (24), der das Abtasten der binären Ausgaben steuert, asynchron ist, und
∘ einen Auswähler (13), der derart konfiguriert ist, dass einzelne der Verzögerungsleitungen (7) mit einzelnen der Rückkehrsignale (8) gespeist werden, und derart konfiguriert ist, dass stattdessen jede der einzelnen der Verzögerungsleitungen (7) abwechselnd mit dem Referenzsignal (12) gespeist wird; und
• der Empfängerschaltkreis dazu konfiguriert ist, eine statistische Analyse der abgetasteten binären Ausgaben (230, 250) auszuführen, die dem Referenzsignal (12) entsprechen, das über eine der Verzögerungsleitungen (7) verbreitet wurde, und darauf basierend einzelne Zeitverzögerungen der Verzögerungselemente (22) der einen der Verzögerungsleitungen (7) zu bestimmen und die bestimmten einzelnen Zeitverzögerungen in der Zeitmessung der Signaländerung zu berücksichtigen, wenn die eine der Verzögerungsleitungen (7) mit einem der Rückkehrsignale (8) gespeist wird.

2. Messvorrichtung (1, 1') nach Anspruch 1,
**dadurch gekennzeichnet, dass**
die Verzögerungselemente dazu konfiguriert sind, die binären Ausgaben durch Erkennung einer ansteigenden und/oder einer absinkenden Kante des Eingabesignals bereitzustellen.

3. Messvorrichtung (1, 1') nach Anspruch 1 oder 2,
**dadurch gekennzeichnet, dass**
der Empfängerschaltkreis einen gemeinsamen Abtasttaktgeber (24) umfasst, der dazu konfiguriert ist, das Abtasten der binären Ausgaben für alle der Verzögerungsleitungen (7) gemeinsam zu steuern.

4. Messvorrichtung (1, 1') nach einem der vorhergehenden Ansprüche,
**dadurch gekennzeichnet, dass**
der Empfängerschaltkreis zu Folgendem konfiguriert ist:
• Zählen von Taktgeberzyklen des Abtasttaktgebers vor einem Auftreten der Signaländerung und
• Bestimmen der verstrichenen Zeit zwischen Taktgeberzyklen des Abtasttaktgebers seit dem Auftreten der Signaländerung unter Verwendung einer asynchronen Logik,
wobei die Zeitmessung der Signaländerung durch Kombinieren der gezählten Taktgeberzyklen des Abtasttaktgebers (24) und der bestimmten verstrichenen Zeit zwischen Taktgeberzyklen des Abtasttaktgebers (24) ausgeführt wird.

5. Messvorrichtung (1, 1') nach einem der vorhergehenden Ansprüche,
**dadurch gekennzeichnet, dass**
für jede der Vielzahl paralleler Verzögerungsleitungen (7) der Empfängerschaltkreis eine Registerleitung umfasst, wobei jede Registerleitung eine Vielzahl von Registern (23, 25) aufweist, die der Vielzahl von Verzögerungselementen (22) zugeordnet und dazu konfiguriert sind, die binären Ausgaben zu speichern.

6. Messvorrichtung (1, 1') nach einem der Ansprüche 1 bis 4,
**dadurch gekennzeichnet, dass**
• für jede der Vielzahl paralleler Verzögerungsleitungen (7) der Empfängerschaltkreis mehrere parallele Registerleitungen umfasst, wobei jede Registerleitung eine Vielzahl von Registern (23, 25) aufweist, die der Vielzahl von Verzögerungselementen (22) zugeordnet und dazu konfiguriert sind, die binären Ausgaben zu speichern, und
• der Empfängerschaltkreis so konfiguriert ist, dass ein Eingabesignal (200), das über eine jeweilige Verzögerungsleitung (7) der Vielzahl von Verzögerungsleitungen verbreitet wird, durch jede der entsprechenden Registerleitungen einzeln abgetastet wird.

7. Messvorrichtung (1, 1') nach einem der vorhergehenden Ansprüche,
**dadurch gekennzeichnet, dass**
• der Empfängerschaltkreis einen Verteilerabschnitt umfasst, der dazu konfiguriert ist, etliche identische Verteilerabschnittsausgabesignale aus einem Verteilerabschnittseingabesignal (8, 12) zu generieren, und
• der Empfängerschaltkreis dazu konfiguriert ist, die Verteilerabschnittsausgabesignale parallel in etliche der Vielzahl paralleler Verzögerungsleitungen (7) einzuspeisen,
wobei der Empfängerschaltkreis so konfiguriert ist, dass der Verteilerabschnitt mit einem der Rückkehrsignale (8) gespeist wird und/oder der Verteilerabschnitt mit dem Referenzsignal (12) gespeist wird.

8. Messvorrichtung (1, 1') nach einem der vorhergehenden Ansprüche,
**dadurch gekennzeichnet, dass**
• der Empfängerschaltkreis mehrere Komparatoren (15) umfasst, die unterschiedliche Schaltschwellenwerte (150) bereitstellen, wobei jeder Komparator (15) ein entsprechendes Komparatorausgabesignal (19) als eine Funktion des entsprechenden Schaltschwellenwerts (150) bereitstellt,
• der Empfängerschaltkreis so konfiguriert ist, dass einzelne Komparatorausgabesignale (19) parallel in einzelne Verzögerungsleitungen (7) der Vielzahl paralleler Verzögerungsleitungen eingespeist werden, und
• der Empfängerschaltkreis so konfiguriert ist, dass die mehreren Komparatoren (15) mit Komparatoreingabesignalen gespeist werden, die aus einem der Rückkehrsignale (8) und/oder aus dem Referenzsignal (12) generiert werden.

9. Messvorrichtung (1, 1') nach Anspruch 8,
**dadurch gekennzeichnet, dass**
der Empfängerschaltkreis dazu konfiguriert ist, die Komparatorausgabesignale (19) zu vergleichen, um amplitudenabhängige Zeitverschiebungen in der Zeitmessung der Signaländerung, insbesondere Zeitverschiebungen aufgrund von Range Walk, zu bestimmen.

10. Messvorrichtung (1, 1') nach einem der vorhergehenden Ansprüche,
**dadurch gekennzeichnet, dass**
die statistische Analyse, um die einzelnen Zeitverzögerungen der Verzögerungselemente (22) der einen der Verzögerungsleitungen (7) zu bestimmen, auf mehreren Verbreitungen des Referenzsignals (12) über die eine der Verzögerungsleitungen (7) und einer Annahme, dass eine ansteigende und/oder eine absinkende Kante des Referenzsignals gleichmäßig im Laufe der Zeit verteilt ist, basiert.

11. Messvorrichtung (1, 1') nach einem der vorhergehenden Ansprüche,
**dadurch gekennzeichnet, dass**
jede der Vielzahl paralleler Verzögerungsleitungen (7) mindestens hundert Verzögerungselemente (22) umfasst.

12. Messvorrichtung (1, 1') nach einem der vorhergehenden Ansprüche,
**dadurch gekennzeichnet, dass**
der Empfängerschaltkreis eine Analyseeinheit (10) umfasst, die von dem programmierbaren integrierten Schaltkreis (6) getrennt ist,
wobei die Analyseeinheit (10) dazu konfiguriert ist,
• die gleichzeitige Betrachtung der abgetasteten binären Ausgaben zu einem bestimmten Zeitpunkt für die Zeitmessung der Signaländerung auszuführen und
• die statistische Analyse der abgetasteten binären Ausgaben, die dem Referenzsignal (12) entsprechen, das über eine der Verzögerungsleitungen (7) verbreitet wurde, auszuführen und darauf basierend die einzelnen Zeitverzögerungen der Verzögerungselemente (22) der einen der Verzögerungsleitungen (7) zu bestimmen.

13. Messvorrichtung (1, 1') nach einem der vorhergehenden Ansprüche,
**dadurch gekennzeichnet, dass**
die Messvorrichtung (1, 1') eine Laserimpulsgeberelektronik umfasst, die dazu konfiguriert ist, ein synchronisiertes Laser-Trigger-Signal (40) zum Triggern einer Laserimpulsemission im Umfang des Emittierens der Vielzahl von Übertragungsstrahlen (4, 4') zu generieren, wobei
• der programmierbare integrierte Schaltkreis (6) einen Trigger-Generator (36) umfasst, der dazu konfiguriert ist, ein anfängliches Trigger-Signal (38) zu generieren, und
• die Laserimpulsgeberelektronik dazu konfiguriert ist, das synchronisierte Laser-Trigger-Signal (40) durch Synchronisieren des anfänglichen Trigger-Signals (38) mit einem bekannten Übertragungstaktgebersignal (41) zu generieren, wobei insbesondere das Übertragungstaktgebersignal (41) durch die gleiche Taktgeberquelle (24) wie der Abtasttaktgeber generiert wird.

14. Messvorrichtung (1, 1') nach Anspruch 13,
**dadurch gekennzeichnet, dass**
die Messvorrichtung (1, 1') einen Verknüpfungsgenerator (42) und mehrere Laser-Trigger (39) umfasst, wobei
• jeder der Laser-Trigger (39) dazu konfiguriert ist, das Triggern der Laserimpulsemission im Umfang eines Emittierens eines zugeordneten Übertragungsstrahls der Vielzahl von Übertragungsstrahlen (4, 4') bereitzustellen,
• die mehreren Laser-Trigger (39) durch das gleiche synchronisierte Laser-Trigger-Signal (40) geregelt werden,
• der Verknüpfungsgenerator (42) dazu konfiguriert ist, Aktivierungssignale (43) für die Übertragungsstrahlen (4, 4'), die den mehreren Laser-Triggern (39) zugeordnet sind, zu generieren, wobei insbesondere jeder der Übertragungsstrahlen, die den mehreren Laser-Triggern (39) zugeordnet sind, eindeutig zu einem der Aktivierungssignale (43) zugewiesen ist, und
• die Messvorrichtung (1, 1') so konfiguriert ist, dass jedes der Aktivierungssignale (43) die Emission seines zugeordneten Übertragungsstrahls durch seinen zugeordneten Laser-Trigger (39) aktiviert.

15. Messvorrichtung (1, 1') nach einem der Ansprüche 1 bis 14,
**dadurch gekennzeichnet, dass**
• der programmierbare integrierte Schaltkreis (6) einen Trigger-Generator (36) umfasst, der dazu konfiguriert ist, ein Laser-Trigger-Signal (38) zu generieren,
• die Messvorrichtung (1, 1') dazu konfiguriert ist, das Laser-Trigger-Signal (38) in eine Verzögerungsleitung eines anderen programmierbaren integrierten Schaltkreises einzuspeisen und darauf basierend eine Emissionszeit des Laser-Trigger-Signals (38) zu bestimmen.

## Revendications

1. Dispositif de mesure (1, 1') pour capture géométrique tridimensionnelle d'un environnement avec
• un émetteur multifaisceaux (2) pour émettre une pluralité de faisceaux de transmission (4),
• un récepteur multifaisceaux ayant une pluralité de zones réceptrices pour recevoir des faisceaux de transmission émis de la pluralité de faisceaux de transmission de retour de l'environnement et
• un circuit récepteur configuré pour générer des signaux de retour (8) qui correspondent aux faisceaux de transmission émis et à des changements de signaux de temps des signaux de retour pour dériver des temps de vol des faisceaux de transmission émis,
**caractérisé en ce que**
• le circuit récepteur comprend un circuit intégré programmable (6) qui a une pluralité de lignes à retard parallèles (7), cependant que chaque ligne à retard respective (7) de la pluralité de lignes à retard parallèles a une pluralité d'éléments retard (22) qui propagent de manière séquentielle un signal d'entrée (200) de la ligne à retard respective (7), cependant que chaque élément retard de la pluralité d'éléments retard (22) est configuré pour fournir une sortie binaire comme fonction du signal d'entrée (200),
• le circuit récepteur est configuré pour exécuter une mesure du temps d'un changement de signal du signal d'entrée (200) en échantillonnant les sorties binaires de la ligne à retard respective (7) et la considération simultanée des sorties binaires échantillonnées (230, 250) à un certain point dans le temps en prenant de plus en compte des retards des éléments retard (22) et
• le circuit récepteur comprend de plus
∘ un générateur de référence (1) configuré pour générer un signal de référence (12) qui a un changement de signal de référence, cependant que le signal de référence est asynchrone par rapport à une horloge d'échantillonnage (24) qui entraîne l'échantillonnage des sorties binaires et
∘ un sélecteur (13) configuré de telle manière que des lignes à retard individuelles sont alimentées avec des signaux de retour individuels (8) et de telle manière qu'alternativement chacune des lignes à retard individuelles (7) est alimentée à la place avec le signal de référence (12) et
• le circuit récepteur est configuré pour exécuter une analyse statistique des sorties binaires échantillonnées (230, 250) qui correspondent au signal de référence (12) qui a été propagé par l'une des lignes à retard (7) et, sur la base de celle-ci, pour déterminer des retards individuels des éléments retard (22) de l'une des lignes à retard (7) et pour prendre en compte les retards individuels déterminés dans la mesure du temps du changement de signal lorsque l'une des lignes à retard (7) est alimentée avec l'un des signaux de retour (8).

2. Dispositif de mesure (1, 1') selon la revendication 1,
**caractérisé en ce que**
les éléments retard sont configurés pour fournir les sorties binaires par reconnaissance d'un flanc montant et/ou descendant du signal d'entrée.

3. Dispositif de mesure (1, 1') selon la revendication 1 ou 2,
**caractérisé en ce que**
le circuit récepteur comprend une horloge d'échantillonnage commune (24) configurée pour entraîner de manière conjointe l'échantillonnage des sorties binaires pour toutes les lignes à retard (7).

4. Dispositif de mesure (1, 1') selon l'une des revendications précédentes,
**caractérisé en ce que**
le circuit récepteur est configuré pour
• compter des cycles d'horloge de l'horloge d'échantillonnage avant l'apparition du changement de signal en utilisant une logique asynchrone,
• déterminer le temps écoulé entre les cycles d'horloge de l'horloge d'échantillonnage depuis l'apparition du changement de signal en utilisant une logique asynchrone,
cependant que la mesure du temps du changement de signal est exécutée en combinant les cycles d'horloge comptés de l'horloge d'échantillonnage (24) et le temps écoulé entre des cycles d'horloge de l'horloge d'échantillonnage (24).

5. Dispositif de mesure (1, 1') selon l'une des revendications précédentes,
**caractérisé en ce que**,
pour chacune de la pluralité des lignes à retard parallèles (7), le circuit récepteur comprend une ligne de registre, chaque ligne de registre ayant une pluralité de registres (23, 25) associés à la pluralité d'éléments retard (22) et étant configurée pour stocker les sorties binaires.

6. Dispositif de mesure (1, 1') selon l'une des revendications 1 à 4,
**caractérisé en ce que**,
• pour chacune de la pluralité des lignes à retard parallèles (7), le circuit récepteur comprend des lignes de registre multiples, chaque ligne de registre ayant une pluralité de registres (23, 25) associés à la pluralité d'éléments retard (22) et étant configurée pour stocker les sorties binaires et
• le circuit récepteur est configuré de telle manière qu'un signal d'entrée (200) qui se propage par une ligne à retard respective (7) de la pluralité de lignes À retard est échantillonné individuellement par chacune des lignes de registre correspondantes.

7. Dispositif de mesure (1, 1') selon l'une des revendications précédentes,
**caractérisé en ce que**
• le circuit récepteur comprend une section de distribution configurée pour générer plusieurs signaux de sortie identiques de section de distribution provenant d'un signal d'entrée de section de distribution (8, 12) et
• le circuit récepteur est configuré pour alimenter des signaux de sortie de section de distribution à plusieurs de la pluralité de lignes à retard parallèles (7) en parallèle,
cependant que le circuit récepteur est configuré de telle manière que la section de distribution est alimentée avec l'un des signaux de retour (8) et/ou que la section de distribution est alimentée avec le signal de référence (12).

8. Dispositif de mesure (1, 1') selon l'une des revendications précédentes, **caractérisé en ce que**
• le circuit récepteur comprend des comparateurs multiples (15) fournissant différents seuils de commutation (150), chaque comparateur (15) fournissant un signal de sortie de comparateur correspondant (19) en tant que fonction du seuil de commutation correspondant (150),
• le circuit récepteur est configuré de telle manière que des signaux individuels de sortie de comparateur (19) sont alimentés en parallèle à des lignes à retard individuelles (7) de la pluralité de lignes à retard parallèles et
• le circuit récepteur est configuré de telle manière que les comparateurs multiples (15) sont alimentés avec des signaux d'entrée de comparateur générés à partir de l'un des signaux de retour (8) et/ou du signal de référence (12).

9. Dispositif de mesure (1, 1') selon la revendication 8,
**caractérisé en ce que**
le circuit récepteur est configuré pour comparer les signaux de sortie de comparateur (19) pour déterminer des décalages de synchronisation dépendant de l'amplitude dans la mesure du temps du changement de signal, en particulier des décalages de synchronisation dus au déplacement en distance.

10. Dispositif de mesure (1, 1') selon l'une des revendications précédentes,
**caractérisé en ce que**
l'analyse statistique pour déterminer des décalages de synchronisation individuels des éléments retard (22) de l'une des lignes à retard (7) est basée sur des propagations multiples du signal de référence (12) par l'une des lignes à retard (7) et une supposition qu'un flanc ascendant et/ou descendant du signal de référence est réparti uniformément dans le temps.

11. Dispositif de mesure (1, 1') selon l'une des revendications précédentes,
**caractérisé en ce que**
chacune de la pluralité des lignes à retard parallèles (7) comprend au moins cent éléments retard (22).

12. Dispositif de mesure (1, 1') selon l'une des revendications précédentes,
**caractérisé en ce que**
le circuit récepteur comprend une unité d'analyse (10) qui est séparée du circuit intégré programmable (6),
cependant que l'unité d'analyse (10) est configurée
• pour exécuter la considération simultanée des sorties binaires échantillonnées à un certain point dans le temps pour la mesure du temps du changement de signal et
• pour exécuter l'analyse statistique des sorties binaires échantillonnées qui correspondent au signal de référence (12) qui s'est propagé par l'une des lignes à retard (7) et, sur la base de celle-ci, pour déterminer les retards individuels des éléments retard (22) de l'une des lignes à retard (7).

13. Dispositif de mesure (1, 1') selon l'une des revendications précédentes,
**caractérisé en ce que**
le dispositif de mesure (1, 1') comprend une électronique de pulseur laser configurée pour générer un signal de déclenchement laser synchronisé (40) pour déclencher l'émission de l'impulsion laser dans le but d'émettre la pluralité de faisceaux de transmission (4, 4'), cependant que
• le circuit intégré programmable (6) comprend un générateur de déclenchement (36) configuré pour générer un signal de déclenchement initial (38) et
• l'électronique de pulseur laser est configurée pour générer le signal de déclenchement laser synchronisé (40) en synchronisant le signal de déclenchement initial (38) avec un signal d'horloge de transmission connu (41), en particulier cependant que le signal d'horloge de transmission (41) est généré par la même horloge source (24) en tant qu'horloge d'échantillonnage.

14. Dispositif de mesure (1, 1') selon la revendication 13,
**caractérisé en ce que**
le dispositif de mesure (1, 1') comprend un générateur de liaison (42) et des déclencheurs laser multiples (39), cependant que
• chacun des déclencheurs laser (39) est configuré pour fournir le déclenchement de l'émission d'impulsion laser dans le but d'émettre un faisceau de transmission associé de la pluralité de faisceaux de transmission (4, 4'),
• les déclencheurs laser multiples (39) sont contrôlés par le même signal de déclenchement laser synchronisé (40),
• le générateur de liaison (42) est configuré pour générer des signaux d'activation (43) pour les faisceaux de transmission (4, 4') associés aux déclencheurs laser multiples (39), cependant que chacun des faisceaux de transmission associés aux déclencheurs laser multiples (39) est affecté uniquement à l'un des signaux d'activation (43) et
• le dispositif de mesure (1, 1') est configuré de telle manière que chacun des signaux d'activation (43) active l'émission de son faisceau de transmission associé par son déclencheur laser associé (39).

15. Dispositif de mesure (1, 1') selon l'une des revendications 1 à 14,
**caractérisé en ce que**
• le circuit intégré programmable (6) comprend un générateur de déclenchement (36) configuré pour générer un signal de déclenchement laser (38),
• le dispositif de mesure (1, 1') est configuré pour alimenter le signal de déclenchement laser (38) à une ligne à retard d'un autre circuit intégré programmable et, sur la base de celui-ci, pour déterminer un temps d'émission du signal de déclenchement laser (38).
